Europäisches Patentamt

European Patent Office

Office européen des brevets

(11) Publication number: **0 624 421 A2**

# EUROPEAN PATENT APPLICATION

(21) Application number: **94104216.0**

(22) Date of filing: **17.03.94**

(51) Int. Cl.5: **B23K  26/00**

(30) Priority: **13.05.93 RU 29023**
**19.08.93 US 110048**

(43) Date of publication of application:
**17.11.94 Bulletin  94/46**

(84) Designated Contracting States:
**BE DE DK FR GB IT NL SE**

(71) Applicant: **RUSSIAN TECHNOLOGY GROUP**
**1670 S. Amphlett Boulevard,**
**Suite 214**
**San Mateo, California 94402 (US)**

(72) Inventor: **Erokhin, Alexander I.**
**Moldagunova Street 18-1-101**
**Russian Federation, Moscow (RU)**

(74) Representative: **Meddle, Alan Leonard**
**FORRESTER & BOEHMERT**
**Franz-Joseph-Strasse 38**
**D-80801 München (DE)**

(54) **Method and apparatus for creating an image by a pulsed laser beam inside a transparent material.**

(57)  A method of creating an image inside a transparent material with the aid of a pulsed laser beam involves as follows: use of a diffraction limited Q-switched laser, in particular, a solid-state single-mode TEM(subscript petit-00) laser; sharp focusing of the laser beam to provide an adjustable microdestruction in the material being treated; and mutual displacement of the laser beam and the material being treated after each laser shot to a next point of the image being reproduced. The microdestruction influenced upon the material at a pre-set point is adjustable in size by varying the actual aperture of the focusing lens and laser radiation power simultaneously. A device for carrying out said method comprises a laser 1, a defocusing lens 2 having a variable focal length, a focusing lens 4 capable of performing controlled motion along the laser beam 3 with the aid of an actuator 5, a drive 7 moving a specimen 6 made of a transparent material in a plane perpendicular to the laser beam 3, and a computer 8 guiding the process of specimen 6 treatment.

FIG. 1

## BACKGROUND OF THE INVENTION

The present invention relates in general to laser technology for treatment of transparent materials and more specifically to a method and apparatus for creating an image inside a transparent material, using a pulsed laser beam.

Some methods and apparatus were previously known for creating a variety of images inside and on the surface of a transparent material, using a pulsed laser radiation emitted by a solid-state laser.

One of such methods of image creation in a transparent material of the Plexiglas type is disclosed in US Patent No.4,092,518 of May 30, 1978, Int. Cl. B23K27/00 or Nat.Cl. 219/121.

The method is as follows: a cylindrical article made of a transparent material is placed with its flat edge towards the laser beam and the laser radiation having a pulse duration in the range of 100 to 300 (greek mu)s is focused inside the article using an optical lens.

The effect of the laser pulse reveals in a number of three-dimensional macrodestructions appearing as fanned out cracks.

A variety of such macrodestructions are produced in the article of a transparent material by changing the depth of laser beam focusing along the length of the article. The macrodestructions are shaped predominantly as saucers-like cracks of different size arranged randomly around the focal point thus establishing an optical decorative effect inside the transparent material.

Such a decorative effect is appreciably intensified when the said article is illuminated.

Used as a device for practical realization of said method is a multimode solid-state free-running pulsed laser and a convergent lens having a focal length from 100 to 200 mm for focusing laser radiation. Cylindrical articles of a transparent material having a diameter of 35 to 80 mm and a length of 85 to 205 mm are recommended for laser treatment.

The said technology enables three-dimensional but uncontrolled and abstractly shaped images to be obtained, which produce a decorative effect.

Moreover, the said technology fails to reproduce any desired image, accounting an uncontrolled behavior of macrodestructions occurring in the material being laser-treated.

Another known method succeed in creating a pre-set image (e.g. image being copied by an optical camera) on the surface of a transparent material by a laser beam. In particular, US patent No.4,843,207 issued on June 27, 1989, IPC B23k26/00 or NPC 219/121 discloses a method and a device for producing, by a laser beam, a decorative ornament on products a transparent material and having a hollow axially symmetrical cap-like shape.

The method comprises the preconditioning of a product made of a transparent material, including a coating on the blank outer surface, being at least 1.2 mm thick and made of material featuring over 75% absorption of laser radiation at its operating wavelength.

Said coating may be formed either by a layer of colored glass or by a layer of precious metal.

A laser beam having a wavelength of 0.5 to 2.0 (greek mu)m acts upon the external absorbing coating of the hollow product through the thick internal wall, thus causing a phase change on the external surface. The laser beam and the product treated by the beam mutually move so that the laser beam is focused on the surface.

To carry the said method a device is used comprising a solid-state pulsed laser featuring an acoustooptic Q-switch an optical lens and a mirror, both being movable along the axis of symmetry of the hollow product in such a manner that laser radiation is focused on products external surface being treated, while the mirror is capable of rotating.

All the motions mentioned above are controlled and monitored by a microcomputer and an optical camera which copies the pattern of a decorative ornament reproduced by the laser beam on the external surface of the product.

The discussed above known technology when applied for artistic treatment of glass makes it possible to impart adequately high decorative properties thereto.

However, such technology imposes some restrictions, that is, the product must be hollow and has maximum thickness of its wall about 40 mm; a product made of a transparent material must be preconditioned on its external surface; the image being reproduced can be made only on the surface of the article.

The present invention has therefore for its principal task to provide a method and apparatus for creating an image, with the aid of the pulsed laser beam, inside a transparent material, both said method and said device being so improved as to attain microdestructions adjustable in size and located at any point of the material so as to create a pre-set image.

The foregoing problem is accomplished due to the provision of a method for creating an image inside a transparent material by a pulsed laser beam, according to which the laser beam is periodically focused at pre-set points of the transparent material and the duration and power of the laser beam pulse are selected to be enough to produce destructions in the material. According to the invention, the present technical solution is not obvious in establishing diffraction-limited beam of a Q-switched laser whereupon the laser beam is sharp focused to produce a size-adjustable microdestruction in the material being treated. Both the material and the laser beam are mutually displaced to a next point of the image being reproduced after each laser shot.

For realization of the proposed method it is recommended to use single-mode, TEM (subscript petit-00) solid-state Q-switched laser as a diffraction limited source of radiation.

It is preferable to carry out sharp laser beam focusing by preliminary adjustable defocusing its radiation by a divergent lens whose focal length determines the actual aperture of the focusing lens which makes it possible, while maintaining constant radiation intensity at the focus, to change the energy of laser radiation, thereby controlling the size of the microdestruction at the laser beam focus.

A device for carrying out the proposed method of creation an image inside a transparent material with the aid of pulsed laser beam comprises a pulsed laser itself, an optical lens adapted to focus the laser beam inside the material and to move the focus along the laser beam, mechanical driving means for mutual displacement of the laser beam and the material, and a computer operatively associated with the laser and the mechanical driving means. According to the invention, the pulsed laser used in the device is essentially a diffraction-limited Q-switched laser, a variable focal length defocusing lens is interposed between the pulsed laser and the focusing lens, said defocusing lens being adapted for changing the occupancy of the actual aperture of the focusing lens. The mechanism driving means for mutual displacement of the transparent material and the laser beam are shaped as a single-axis and two-axis motion mechanism.

Adjusting microdestructions characteristics it is possible now to produce three or two-dimensional images of a pre-set pattern in a transparent materials having various shapes and mechanical features say e.g. hardness.

The present invention will be more apparent from the following description of more specific exemplary embodiments thereof with reference to the accompanying drawings, wherein:

FIG.1 is a schematic diagram of apparatus for carrying out a method of creation an image inside a transparent material, using a laser beam, according to the invention;

FIG.2 is a schematic diagram of sharp focusing of a beam of the pulsed laser for realization of the method proposed in present invention; and

FIG.3 is a schematic diagram of reproduction of a copy of image stored in computer memory performed by a laser beam inside a specimen of a transparent material.

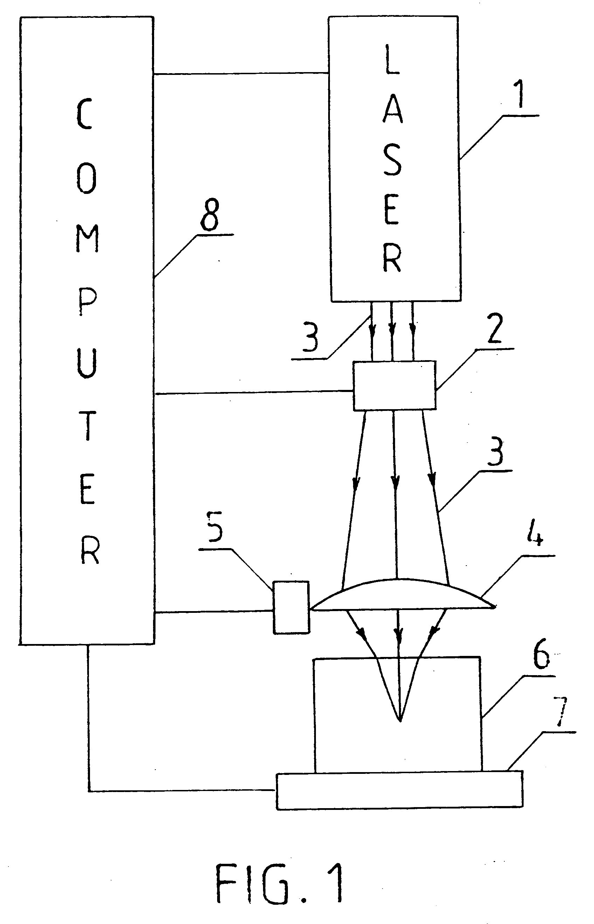

To provide a better understanding of the essence of the proposed method it is expedient first to consider a schematic diagram of the apparatus for carrying out a said method as shown in FIG.1.

The device comprises a solid-state pulsed laser 1 fixed in a stationary position; a variable focal length defocusing divergent lens 2 fixed stationary on the axis of the laser beam 3; a focusing lens 4 located on the axis of the laser beam 3 with a possibility of controlled motion along said axis with the aid of actuator 5; a specimen 6 of a transparent material arranged across the path of the focused laser beam 3, the specimen 6 being capable of moving in a plane orthogonal to the laser beam 3, with the aid of a drive 7.

The drive 7 may be in fact a plotter of the heretofore-known construction.

A computer 8 is provided for control over operation of the pulsed laser 1, an actuator 5 and a drive 7 for displacing the focusing lens 4 and the specimen 6. In addition, the computer 8 controls the focal length of the defocusing divergent lens 2 which is similar to the commonly known photographic camera lenses with variable focal length.

It is a TEM(subscript petit-00) laser that proves to be a most suitable for the purpose.

Selection of such a laser is conditioned by the most brightness of radiation emitted by said laser at a given power.

Use of a laser featuring a lower brightness-to-power ratio leads to an undesirable effect of self-focusing. It has been found that exceeding the self-focusing threshold by laser radiation power results in laser beam self-trapping into a number of strings. To avoid this disadvantage one must provide that laser radiation power be lower than self-focusing threshold.

In order to initiate breakdown nevertheless at the focal point it is necessary to exceed the threshold breakdown intensity at a given point. It is the laser type selected herein that features the maximum intensity-to-radiation power ratio at the focal point not varying focusing geometry.

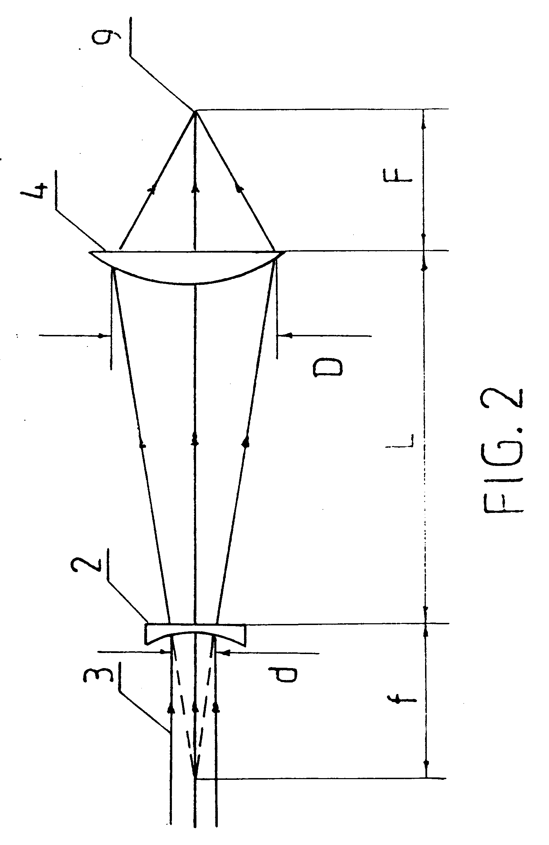

Another peculiar feature of the selected laser type resides in utilizing utmost possibilities of sharp radiation beam focusing, which is schematically represented in FIG. 2.

A sharp laser radiation focusing necessary for normal operation of the apparatus is carried out as follows.

The laser radiation beam 3 having a diameter d is incident upon the defocusing lens 2 and emerges therefrom in a diverging form to get into the aperture of the focussing lens 4 and having a diameter D which is found from the formula

$$D = d\,(L + f)/f,$$

where L - distance between lenses

f - focal length of defocusing lens

In a case of aberrationless focusing by the lens 4 the focal spot dimension is characterized by the value

$$((lamda)/D)*F,$$

where (lamda) - radiation wavelength of the laser used;

F - focal length of the focusing lens.

Intensity of laser radiation at a focal spot 9 is found from the formula

$$I = P/S,$$

where P - power of laser radiation,

S - effective area of focal spot.

It results from this formula that intensity of laser radiation is proportional to the following expression

$$(P/(landa)squared)*(D/F)squared.$$

When calculating the value of radiation intensity at focus of a multimode laser the above expression is to be divided by squared ratio between the beam divergence of the laser used and diffraction-limited divergence thereof. Compensation of focusing loss by increasing the radiation power will result in an undesired increase in the part played by self-focusing. Increase in the second factor in the above expression is restricted by aberration of the focusing lens 4.

The parenthesize relation D/F defines the focusing sharpness, whence it ensues that maximum laser radiation intensity in the focus point for a given radiation power is attainable at a sharpest aberration-free focusing of a single-mode laser beam.

The shorter the focal length F of the defocusing divergent lens 2, the sharper the focusing of the laser radiation and the higher its intensity. Thus, a desired intensity of laser-induced breakdown at the focus point is attainable with lower power consumption, thereby making it possible to create a laser-produced destruction area having smaller linear dimensions.

Consequently, by adjusting the focal length of the lens 3 and hence the laser radiation power one can control the size of the destruction area in the specimen 6 made of a transparent material, which allows to reproduce a half-tone picture.

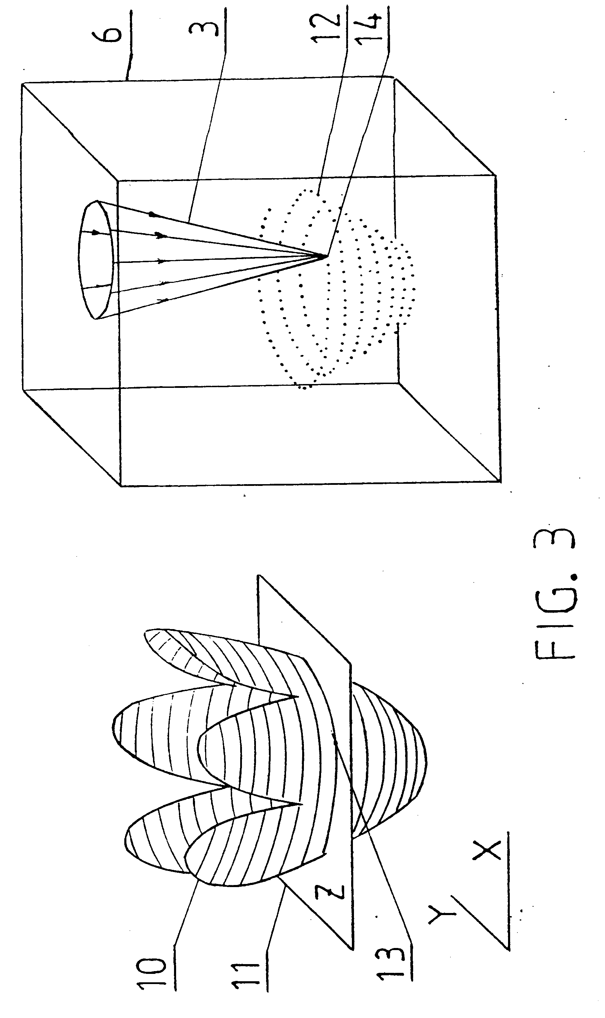

In principal, the proposed technology of creating a three- dimensional or two-dimensional image in a light-transparent material can be applied under manual control of the laser 1 by changing the laser beam focusing sharpness and the radiation power thereof before each shot. However, the image creation process will in such case be of low productivity. To accelerate the process a computer monitoring of system operation is used, which can be illustrated by a detailed description of the schematic diagram presented in FIG. 3.

An image 10 of the object to be reproduced in written down in the memory of computer 8 as a number of sections made by parallel planes 11 defined by the coordinate Z. Each of the sections 11 appears as an array of picture elements (dots) situated on a plane (X,Y) and adjoining one another.

Transfer of the image 10 inside the specimen 6 of a transparent material and reproduction of a replica 12 of the image 10 therein consist in a consecutive representation of each point 13 from the three-dimensional space of the image 10 to a respective point 14 of the specimen 6 with the aid of the laser beam 3. The process of transferring the image 10 is carried out by layer-after-layer filling of the section 11, beginning with the lowest one. The actuators 5 and drive 7 controlled by the computer 8 make the focus point of the laser beam 3 coincident with the point 14 inside the specimen 6, adjust the focal length of the defocusing divergent lens 2 for a value required to produce microdestruction of a pre-set size, and the computer 8 guides the laser 1 to generate a pulse having a power enough for breakdown, whereupon a next point on the same section 11 is to be reproduced, for which purpose the specimen 6 is displaced with the aid of the drive 7.

Having completed reproduction of the points 13 of the section 11 the computer 8 guides the actuator 5 for displacing the focusing lens 4 to a position corresponding to laser beam focusing in a new surerjacent section 11. Further on the process continues in the aforementioned order.

It is obvious that whenever it is necessary to create a flat (two-dimensional) image in the specimen 6 of a transparent material rather than a three-dimensional image, it will suffice for this purpose to have a single section in the program of the computer 8 that corresponds to the image desired.

It has been stated hereinbefore that the technology disclosed herein enables transparent materials of various shapes and having diverse mechanical characteristics to be treated. Among such materials may be organic and inorganic glass, naturally occurring and synthetic crystals, including tinted ones, provided that the tint does not sufficiently diminish the transmission of the laser beam, as well as transparent polymer materials, and widegap semiconductors.

Given below are some examples of treatment of certain light- transparent materials, using the method proposed herein.

Example 1

A three-dimensional image was created in a specimen made of silicate glass having a refractive index of 1.505 at an optical wavelength of 1.06 (greek mu)m.

The specimen was rectangular in shape having its side faces several centimeters long (up to 10 cm) and featured a smooth plain surface on the side of laser beam penetration thereinto.

TEM(subscript petit 00) radiation was used emitted by a Nd:YAG laser having a wavelength of 1.06 (greek mu)m and a pulse duration of the order of 15 ns, the radiation power ranging from 5 to 15 mJ.

A sharp focusing of the laser beam was performed in a way described hereinbefore. The focal spot was adjusted for size with the aid of focusing lens having a focal length from 2 to 5 cm, while the actual aperture of said lens varied from 5 to 15 mm, which influenced appreciably the size of the focal spot and hence the destructed area in the specimen.

The size of the destructed area varied within 0.1 and 0.4 mm. The thus-created three-dimensional image inside the blank was constituted by a plurality of points.

Example 2

A three-dimensional image was created in a specimen of synthetic quartz grown from a gaseous phase and having a refractive index of 1.45 at an optical wavelength of 1.06 (greek mu)m. The cubic specimen having its side faces several centimeters long (up to 10 cm) faced towards the laser beam with one of its flat sides during treatment.

Use was made of the TEM(subscript petit 00) radiation emitted by Nd:YAG laser having a wavelength of 1.06 (greek mu)m and a pulse duration of 15 ns, the radiation power varying from 10 to 30 Mj.

A sharp focusing of the laser beam was carried out in a way described hereinabove. The side of the focal length was adjusted by means of a focusing lens having a focal length of 2 to 5 cm. The actual aperture of the focusing lens varied from 5 to 15 mm and the size of the destructed area ranged from 0.1 to 0.4 mm.

The thus-created three-dimensional image inside the specimen was also constituted by a plurality of points.

To attain similar results when treating the purest and optically strongest transparent materials the power of a laser radiation pulse is to be increased not more than two fold compared with the radiation power applied for treatment of silicate glass.

When treating transparent polymer materials the power of a laser radiation pulse can be reduced by an order of magnitude compared with the radiation power applied for treatment of silicate glass.

As regards industrial applicability the present invention can find application for artistic treatment of glass, as well as for internal and external engraving of crystals.

The features disclosed in the foregoing description, in the claims and/or in the accompanying drawings may, both separately and in any combination thereof, be material for realising the invention in diverse forms thereof.

**Claims**

1. A method for creating an image inside a transparent material with the aid of a pulsed laser beam, comprising:

    using a diffraction-limited Q-switched laser for generating a laser beam;

    sharp focusing of said laser beam to establish a size-adjustable microdestruction in said transparent material;

    periodical focusing of said laser beam at pre-set points inside said transparent material;

    selecting the duration and power of a pulse of said laser beam sufficient for inflicting a microdestruction upon said transparent material; and

    displacing mutually said transparent material and said laser beam to a next point of the image being reproduced in order to establish a next microdestruction.

2. A method according to Claim 1 or 2, wherein used as said diffraction-limited Q-switched laser is a solid-state single-mode TEM(subscript petit-00) laser.

3. A method according to Claim 1 or 2, comprising:

    performing said sharp focusing of said laser beam by preliminary defocusing said laser radiation with the aid of a divergent lens;

    changing the focal length of said divergent lens in order to modify the actual aperture of said focusing lens; and

    adjusting the size of the destructed area at the focus point of the laser beam by simultaneous variation of said laser power and said actual aperture of said focusing lens.

4. A device for creating an image in a transparent material with the aid of a pulsed laser beam, comprising:

    a diffraction-limited Q-switched pulsed laser; an optical lens focusing the radiation of said laser inside said transparent material a single-axes actuator for displacing said focusing lens along the laser beam;

a defocusing divergent lens having a variable focal length and interposed between the pulsed laser and said focusing lens, said defocusing lens being aimed at changing the occupancy of the actual aperture of said focusing lens;

a two-axis drive for displacing said transparent material; and

a computer operatively associated with said pulsed laser and said actuator and drive.

FIG. 1

FIG. 2

FIG. 3

EP 0 624 421 A2